# EUROPEAN PATENT APPLICATION

(11) **EP 4 597 785 A1**
(43) Date of publication of application: **06.08.2025**
(21) Application number: 24200791.2
(22) Date of filing: 17.09.2024
(51) Int. Cl.: H02J 7/00, H01M 10/42

(54) **BATTERY MANAGEMENT DEVICE WITH POWER DISTRIBUTION UNIT, BATTERY AND VEHICLE**

(30) Priority: 01.02.2024 CN 202410146550
(71) Applicant: Xiaomi EV Technology Co., Ltd., 100176 Beijing (CN)
(72) Inventor: LI, Chao, Beijing, 100176 (CN)
(74) Representative: Stöckeler, Ferdinand

(57) **Abstract**

A battery management device, a battery and a vehicle, including a power distribution unit, a management control unit, a bottom plate (3) and a second circuit board (52). The management control unit includes a first circuit board (53); the power distribution unit and the management control unit are both integrated on the bottom plate (3); the second circuit board (52) is electrically connected with the first circuit board (53) and the power distribution unit, and the first circuit board (53) and the second circuit board (52) are integrally formed.

## Description

### FIELD

The present invention relates to the field of batteries, and in particular to a battery management device, a battery and a vehicle.

### BACKGROUND

In recent years, with the rise of the new energy automobile industry, the battery industry has also developed rapidly. In order to ensure the stable operation of the battery, the battery usually includes electrical components such as a power distribution unit and a battery management system.

### SUMMARY

The present invention aims to solve one of the technical problems in the related art at least to some extent.

Therefore, embodiments of a first aspect of the present invention propose a battery management device, which has high integration, is beneficial to reducing the arrangement of parts such as patch cords, and facilitates the installation and arrangement in a cramped space.

Embodiments of a second aspect of the present invention also provide a battery including the battery management device mentioned above.

Embodiments of a third aspect of the present invention also provide a vehicle including the battery mentioned above.

The battery management device according to embodiments of the first aspect of the present invention includes: a power distribution unit; a management control unit, including a first circuit board; a bottom plate, and the power distribution unit and the management control unit are integrated on the bottom plate; a second circuit board electrically connected with the first circuit board and the power distribution unit, and the first circuit board and the second circuit board are integrally formed.

Optionally, the battery management device includes a cover body, and the cover body is provided on a side of the second circuit board facing away from the power distribution unit, and the cover body is fixedly connected to the power distribution unit and the management control unit.

Optionally, the power distribution unit includes a first housing and a plurality of first electrical components, and the first housing is connected to the bottom plate, and the plurality of first electrical components are assembled in the first housing; and an outer surface of the first housing corresponding to the first electrical components is made of insulating material, and at least part of the first electrical components are electrically connected with the second circuit board.

Optionally, the power distribution unit includes an electrical connector, and the electrical connector is electrically connected with the first electrical component, and a bottom wall of the first housing is located at one side of the first housing close to the bottom plate, and at least part of the electrical connector is provided on the bottom wall of the first housing and exposed relative to the bottom wall of the housing to form a heat conducting area.

Optionally, at least part of the electrical connector and the first housing are integrally injection molded.

Optionally, the power distribution unit further includes an insulating layer, and the insulating layer covers the heat conducting area.

Optionally, the power distribution unit further includes a heat conducting layer, and the heat conducting layer is sandwiched between the insulating layer and the bottom plate.

Optionally, the electrical connector includes a plate body and a column body, and the plate body and the bottom wall of the housing are injection molded, and the column body is located in the first housing and extends along a direction from the bottom wall of the housing to the second circuit board, the column body is connected between the second circuit board and the plate body, and at least part of the surface of the plate body is exposed from the bottom wall of the housing to form the heat conducting area.

Optionally, the circuit board includes a plurality of connecting pieces, and the plurality of connecting pieces are arranged at intervals along a circumferential direction of the circuit board, and the electrical connector is provided with a plurality of column bodies, at least part of the column bodies are correspondingly connected with the plurality of connecting pieces, and joints between part of column bodies and the connecting pieces are configured to form circuit sampling points, and joints between part of column bodies and the connecting pieces are configured to output current externally.

Optionally, the power distribution unit includes a plurality of adapter pieces, and the plurality of adapter pieces are bent and extended, and the plurality of connecting pieces are correspondingly connected with the plurality of column bodies through the plurality of adapter pieces.

Optionally, the management control unit includes a second housing and a second electrical component, and the second housing is made of metal, at least part of the second electrical component is assembled in the second housing, and a bottom wall of the second housing extends to the bottom of the first housing and is configured as the bottom plate.

Optionally, the management control unit includes a plurality of pillars, and the second electrical component includes a power board, the power board is provided in the second housing, and the second housing includes a metal cover, and the plurality of pillars support the metal cover and the circuit board and are located therebetween.

Optionally, distances between the first circuit board and the bottom plate and between the second circuit board and the bottom plate are the same.

Optionally, the battery management device includes an electrical interface, and the electrical interface is configured to electrically connect with an outside of the battery, and is integrated in the first circuit board.

Optionally, the bottom plate is a metal plate, and/or, a channel for circulating coolant is provided inside the bottom plate.

The battery according to embodiments of the second aspect of the present invention includes the battery management device as described in any of the above embodiments.

The vehicle according to embodiments of the third aspect of the present invention includes the battery as described in any of the above embodiments.

Beneficial effects: the battery management device, and the battery and the vehicle including the battery management device disclosed by embodiments of the present invention have high integration, which is beneficial to reducing the arrangement of parts such as patch cords to save space.

### BRIEF DESCRIPTION OF THE DRAWINGS

FIG. 1 is a schematic perspective view of a battery management device according to an embodiment of the present invention.
FIG. 2 is a schematic layout view of a circuit board of the battery management device in FIG. 1.
FIG. 3 is an exploded schematic view of the battery management device in FIG. 1.
FIG. 4 is an assembly schematic view of a relay of a power distribution unit according to an embodiment of the present invention.
FIG. 5 is a schematic structural view of an integrated structure with a first housing and an electrical connector according to an embodiment of the present invention.
FIG. 6 is an exploded schematic view of the first housing and the electrical connector in FIG. 5.
FIG. 7 is a schematic bottom view of the first housing and the electrical connector in FIG. 5 after integration.
FIG. 8 is a schematic view of an arrangement of an insulating layer and a heat conducting layer of a power distribution unit according to an embodiment of the present invention.
FIG. 9 is a schematic structural view of a battery management device with a cover body removed.
FIG. 10 is a schematic view of the circuit board in FIG. 9.

### DETAILED DESCRIPTION

Hereinafter, embodiments of the present invention will be described in detail, examples of which are illustrated in the accompanying drawings. The embodiments described below by referring to the accompanying drawings are illustrative and are intended to explain the present invention, and should not be construed as limiting the present invention.

The existing electrical components of the power battery have problems such as low integration and redundant parts such as patch cords, which takes up a large space and is not conducive to the improvement of the energy density of the battery.

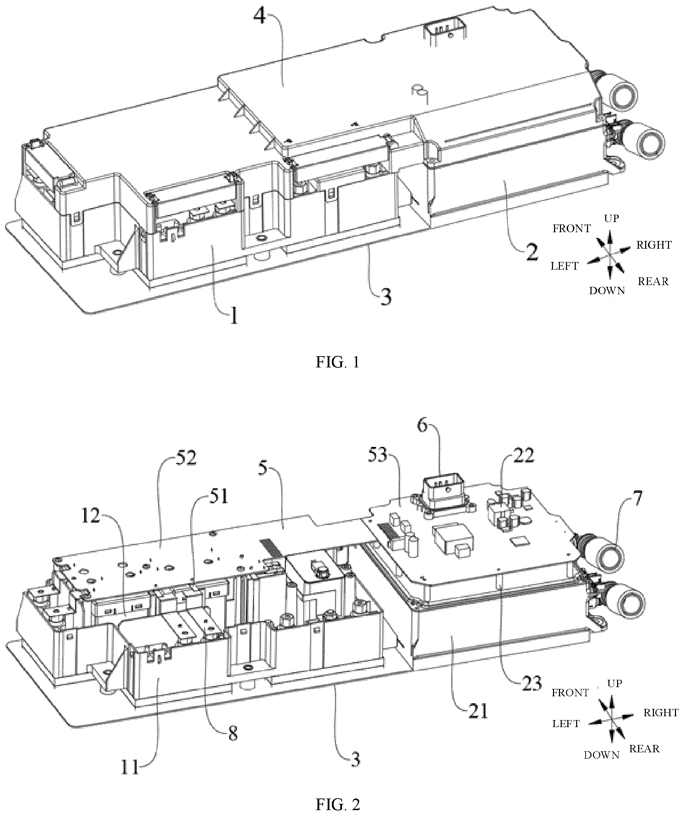

As illustrated in FIGS. 1 and 2, the battery management device according to embodiments of the present invention includes a power distribution unit 1, a management control unit 2, a bottom plate 3 and a second circuit board 52. The management control unit 2 includes a first circuit board 53.

The power distribution unit 1 may be a battery disconnect unit (BDU), and the management control unit 2 may include a battery management system (BMS) and a charging control unit (CCU). In other embodiments, the management control unit 2 may also be only one of the battery management system (BMS) and the charging control unit (CCU).

Both the power distribution unit 1 and the management control unit 2 are integrated on the bottom plate 3. For example, as illustrated in FIGS. 1 and 2, the bottom plate 3 may be generally rectangular plate, and both the power distribution unit 1 and the management control unit 2 may be fixed on the top side of the bottom plate 3 by means of screw fixation, adhesion, etc.

The second circuit board 52 electrically connects the first circuit board 53 and the power distribution unit 1. For example, as illustrated in FIG. 2, the second circuit board 52 may be located above the power distribution unit 1, and the power distribution unit 1 may be electrically connected with the second circuit board 52; the first circuit board 53 may be located on the right side of the second circuit board 52, and the first circuit board 53 may also be electrically connected with the second circuit board 52, so that the first circuit board 53 may be electrically connected with the power distribution unit 1 via the second circuit board 52.

In some embodiments, as illustrated in FIG. 2, the first circuit board 53 and the second circuit board 52 may be integrally formed and form an integrated circuit board 5, which may be provided on the side of the power distribution unit 1 away from the bottom board 3, and the power distribution unit 1 are electrically connected with the management control unit 2 through the circuit board 5.

For example, as illustrated in FIG. 2, the circuit board 5 may be located above the power distribution unit 1 and the management control unit 2, and the parts of the power distribution unit 1 and the management control unit 2 located below the circuit board 5 may be directly connected with the circuit board 5 by welding.

When in use, the second circuit board 52 may perform voltage sampling of high-voltage connection points, signal acquisition of shunt resistors, driving of pyrotechnic fuse (Pyrofuse), and the like. The signal collected by the second circuit board 52 may be directly output to the first circuit board 53 above the management control unit 2, and then the information interaction with the whole vehicle may be realized through the corresponding interface.

In the battery management device of embodiments of the present invention, the BDU module, the BMS module and/or the CCU module are all assembled on the same bottom plate 3, thus realizing the sharing of the bottom plate 3, improving the overall integration and compactness of arrangement, and this integration is also beneficial to reducing the use of transfer interfaces, patch cords and the like, so that two adjacent modules may be directly connected with each other, simplifying the overall assembly form and saving space.

Secondly, because the above functional modules are all integrated on the same bottom plate 3, the movement consistency and synchronization of related functional modules are doing well during use, which avoids the problem that the shared components may be broken and may not be integrated when two functional modules, which are independently arranged in the related art, share components due to different vibration amplitude and vibration frequency.

In some embodiments, the bottom plate 3 may conduct heat and is used for cooling the power distribution unit 1 and the management control unit 2. For example, the bottom plate 3 may be made of metal and has good thermal conductivity. When in use, the heat generated by the power distribution unit 1 and the management control unit 2 may be quickly dissipated through the bottom plate 3, thus reducing the situation that the temperature of the power distribution unit 1 and the management control unit 2 is too high, ensuring the stability of operation.

Due to the good thermal conductivity of the bottom plate 3, heat conduction and heat dissipation of a plurality of functional modules may be realized at the same time by means of the bottom plate 3, thus meeting the use needs of rapid heat dissipation of different functional modules of the battery management device and ensuring the stability of the overall operation.

In some embodiments, the battery management device includes a cover body 4, and the cover body 4 is arranged on the side of the second circuit board 52 facing away from the power distribution unit 1, and is fixedly connected to the power distribution unit 1 and the management control unit 2.

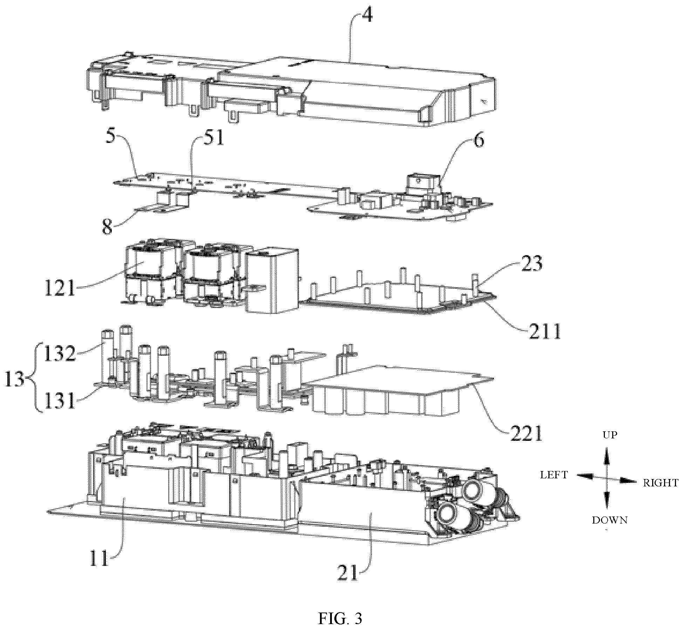

For example, as illustrated in FIGS. 1 and 3, the cover body 4 may be generally flat and may be integrally formed. The cover body 4 may snapped over the circuit board 5, that is, the circuit board 5 may be hidden in the cover body 4. In the up-down direction, the left part of the cover body 4 may be fixedly connected with the power distribution unit 1, and the right part of the cover body 4 may be fixedly connected with the management control unit 2. The specific forms of fixed connection may be snap fit, fastener fixation, etc. The cover body 4 may play a protective role, protecting the circuit board 5, the power distribution unit 1 and the management control unit 2.

In other embodiments, the cover body 4 may also be provided separately. For example, there may be two cover bodies 4, one of which may be installed on the top side of the power distribution unit 1 and the other of which may be installed on the top side of the management control unit 2.

In some embodiments, the power distribution unit 1 includes a first housing 11 and a plurality of first electrical components 12, and the first housing 11 is connected with the bottom plate 3, and the plurality of first electrical components 12 are all assembled in the first housing 11; the outer surface of the first housing 11 corresponding to the first electrical components 12 is made of insulating material, and at least part of the first electrical components 12 are electrically connected with at least one circuit board 5.

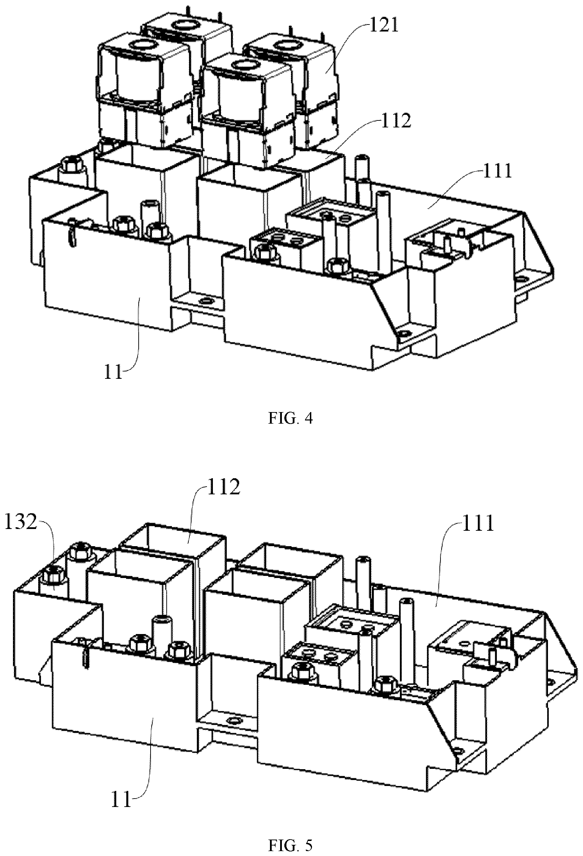

For example, as illustrated in FIGS. 4 and 5, the material of the first housing 11 may be plastic, the first housing 11 may be processed and molded by injection molding, the first electrical component 12 may include a relay 121, and a plurality of assembly slots 112 may be integrally formed in the first housing 11, the notches of a plurality of assembly slots 112 may be arranged facing upward, and a plurality of assembly slots 112 may be generally arranged in a matrix layout. A plurality of relays 121 may be inserted and assembled in a plurality of assembly slots 112 in one-to-one correspondence, and the top end of each relay 121 may be directly welded with the circuit board 5, so as to meet the use requirement of supplying power to the relay 121 through the circuit board 5.

In other embodiments, the first housing 11 may only be partially made of insulating material, that is, only the part of the first housing 11 opposite to the first electrical component 12 in the in-out direction may be made of insulating material.

In some embodiments, the power distribution unit 1 includes an electrical connector 13, which is electrically connected with the first electrical component 12. The bottom wall 113 of the first housing 11 is located on the side of the first housing 11 close to the bottom plate 3, and at least part of the electrical connector 13 is arranged on the bottom wall 113 of the first housing 11 and exposed relative to the bottom wall 113 to form a heat conducting area 133.

For example, as illustrated in FIG. 4 to FIG. 6, the first housing 11 may generally be a box-like structure, and the top side of the first housing 11 may be provided with an opening 111, and the bottom wall 113 of the housing is the housing wall at the bottom side of the first housing 11. The electrical connector 13 and the first housing 11 are fixed by integral injection molding. For example, during processing, the electrical connector 13 may be first placed in a corresponding mold, and then liquid injection liquid is poured in the mold to form the first housing 11 after the injection liquid is solidified, and thus the electrical connector 13 is integrally fixed with the first housing 11. The material of the electrical connector 13 may be aluminum, aluminum alloy, etc. Therefore, the electrical connector 13 has thermal conductivity and electrical conductivity, thus meeting the needs of practical use.

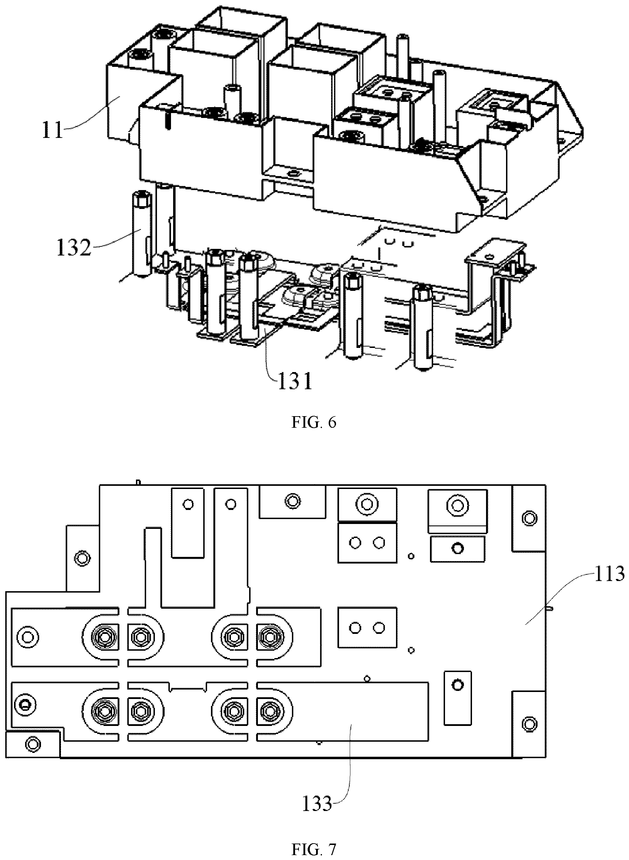

As illustrated in FIG. 7, part of the electrical connectors 13 are exposed at the bottom wall 113 of the housing and form a heat conducting area 133. For example, during injection molding, the bottom side of the electrical connectors 13 may be attached to the corresponding surfaces of the module, and these surfaces will not be covered by the injection liquid during injection molding, and these exposed surfaces will form a heat conducting area 133 after the injection liquid is solidified.

When assembling the power distribution unit 1, the heat conducting area 133 may be connected with a heat conduction plate, a liquid cooling plate, etc., so that the heat on the electrical connector 13 may be conducted to the outside through the heat conducting area 133, and then the rapid heat dissipation of the electrical connector 13 may be realized, thus avoiding the situation that the temperature of the electrical connector 13 easily gets too high when the current passes through the electrical connector 13.

The electrical connector 13 and the first housing 11 are integrally injection molded, which avoids considering the assembly space of the electrical connector 13 and the first housing 11 when the first housing 11 and the electrical connector 13 are arranged separately in the related art, so that the electrical connector 13 may utilize the space inside the housing wall of the first housing 11 to improve the overall integration and space utilization rate.

Secondly, part of the surface of the electrical connector 13 is directly exposed to the outside to form a heat conducting area 133. By means of the heat conducting area 133, the heat on the electrical connector 13 may be quickly dissipated, thus avoiding heat accumulation, thus improving the heat dissipation performance of the electrical connector 13 and avoiding the situation that the temperature of the electrical connector 13 is too high when high-voltage current passes through the electrical connector for a long time.

In some embodiments, the power distribution unit 1 includes an insulating layer 14, and the insulating layer 14 is insulated and disposed on the bottom side of the bottom wall 113 of the housing, and covers the heat conducting area 133. The insulating layer 14 may be made of an insulating material, for example, the insulating layer 14 may be made of an insulating film, and the insulating film may be made of polyimide, polyethylene, polyvinylidene difluoride, polytetrafluoroethylene and the like.

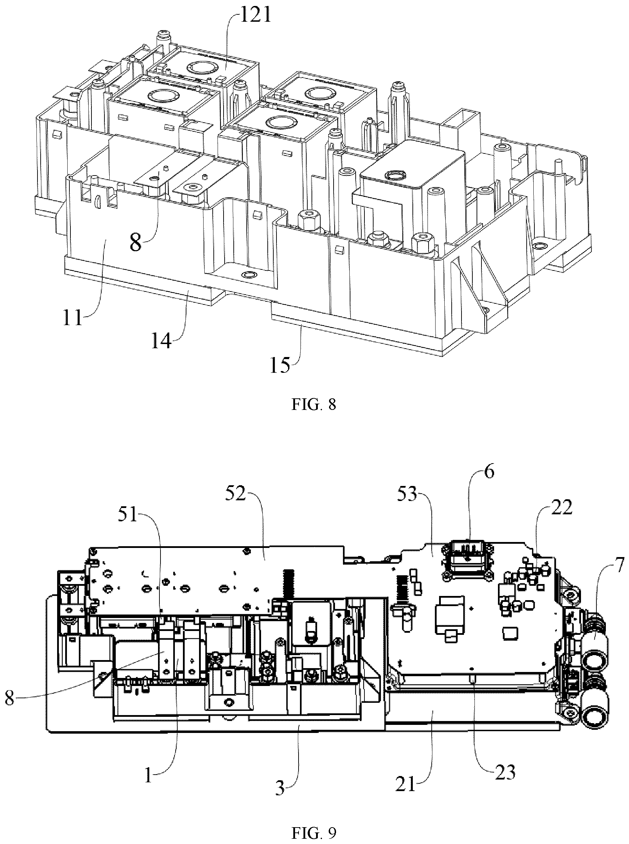

As illustrated in FIG. 8, the insulating film may be laid on the bottom side of the first housing 11, and the insulating film may shield and cover the heat conducting area 133, and the insulating film may play an insulating protection effect to avoid electric leakage and improve the safety of use.

In some embodiments, the power distribution unit 1 includes a heat conducting layer 15 sandwiched between the insulating layer 14 and the bottom plate 3. For example, as illustrated in FIG. 8, the heat conducting layer 15 is disposed on the bottom side of the insulating layer 14, and both the insulating layer 14 and the heat conducting layer 15 have thermal conductivity, and the heat conducting layer 15 is sandwiched between the insulating layer 14 and the bottom plate 3.

Specifically, the heat conducting layer 15 may be made of thermal grease and other materials, and may be laid on the lower side of the insulating film after the insulating film is laid. When in use, the heat on the electrical connector 13 may be conducted to the insulating layer 14 and the heat conducting layer 15 in turn through the heat conducting area 133, thus ensuring the heat dissipation effect while having better insulation protection.

In some embodiments, the electrical connector 13 includes a plate body 131 and a column body 132, the plate body 131 is injection molded with the bottom wall 113 of the housing, the column body 132 is located in the first housing 11 and extends in the direction from the bottom wall 113 of the housing to the second circuit board 52, the column body 132 is connected between the second circuit board 52 and the plate body 131, and at least part of the surface of the plate body 131 is exposed from the bottom wall 113 to form a heat conducting area 133.

For example, as illustrated in FIG. 6, the plate body 131 may be in a strip shape, and the column body 132 may be in a cylindrical shape, and the column body 132 may be formed integrally with the plate body 131, and the column body 132 may be located at the top side of the plate body 131. During processing, only the plate body 131 and the bottom wall 113 of the first housing 11 may be integrally injection molded, and as illustrated in FIG. 5, the column body 132 may be located in the first housing 11 and may extend in the up-down direction.

Therefore, injection positions of the electrical connectors 13 may be located at the bottom of the first housing 11, which is convenient for the integrated injection molding and is also beneficial to simplifying the processing technology. The column body 132 may be used to electrically connect the electrical connector 13 with other components such as the circuit board 5, and the first housing 11 may play a protective role because the column body 132 is located in the first housing 11.

It should be noted that the electrical connector 13 may include a plurality of sub-rows, and each sub-row may include a plate body 131 and a column body 132. During assembly, each sub-row may be connected between two electrical components, so that the electrical connection between the corresponding two electrical components may be realized, and at least part of the bottom surface of each sub-row may form a heat conducting area 133.

In some embodiments, the column body 132 is connected with the circuit board 5 through fasteners, and an assembly hole for inserting the fasteners is provided in the column body 132. Fasteners may be bolts, and threaded holes may be provided in the column body 132. When assembling, the fasteners may be threaded into the assembly holes of the column body 132 through the upper side of circuit board 5, thus facilitating the installation and disassembly.

In some embodiments, the circuit board 5 includes a plurality of connecting pieces 51, and a plurality of connecting pieces 51 are arranged at intervals along the circumferential direction of the circuit board 5. The electrical connector 13 is provided with a plurality of column bodies 132, and at least part of the column bodies 132 are correspondingly connected with the connecting pieces 51, and joints of part of the column bodies 132 and the connecting pieces 51 are used for forming circuit sampling points, and joints of part of the column bodies 132 and the connecting pieces 51 are used for outputting current to the outside.

For example, as illustrated in FIGS. 2 and 3, the circuit board 5 may be provided with four connecting pieces 51, in which two connecting pieces 51 may be located on the left side of the circuit board 5 and arranged side by side in the front-rear direction, and these two connecting pieces 51 are connected and fixed with the corresponding two column bodies 132 through fasteners, and joints of the two connecting pieces 51 and the corresponding column bodies 132 may form a sampling point for high-voltage sampling.

The other two connecting pieces 51 may be provided at the rear side of the circuit board 5, and these two connecting pieces 51 may be provided side by side in the left-right direction, and may also be connected and fixed with the corresponding two column bodies 132 by fasteners. When in use, the joints between the two connecting pieces 51 and the corresponding column bodies 132 may be connected with an external electrical interface, so that the use requirement of external power supply may be realized.

In some embodiments, the power distribution unit 1 includes a plurality of adapter pieces 8 which extend in a bending direction, and a plurality of connecting pieces 51 are connected with a plurality of column bodies 132 in one-to-one correspondence through a plurality of adapter pieces 8.

For example, as illustrated in FIGS. 8 and 9, the number of the adapter pieces 8 may be the same as the number of the connecting pieces 51. The adapter pieces 8 may be generally Z-shaped plates, that is, each adapter piece 8 may first extend in the horizontal direction, then be bent downward, and then be bent again and extend horizontally. The upper top end of each adapter piece 8 may be connected with the corresponding connecting piece 51, and the lower bottom end of each adapter piece 8 may be connected with the corresponding column body 132.

Because the connecting piece 51 on the circuit board 5 is inconvenient to process and easy to be damaged, on the one hand, the arrangement of the adapter piece 8 may reduce the disturbance to the connecting piece 51 during connection, thus avoiding the situation that the connecting piece 51 is easily broken, and on the other hand, the processing difficulty of the circuit board 5 may also be reduced, so that the connecting piece 51 may adopt uniform specifications during processing.

In some embodiments, as illustrated in FIG. 2, the management control unit 2 includes a second housing 21 and a second electrical component 22. The second housing 21 is made of metal, specifically aluminum. At least part of the second electrical components 22 are assembled in the second housing 21. For example, part of the second electrical components 22 may be installed on the top side of the circuit board 5, and part of the second electrical components 22 may be assembled in the second housing 21. The second housing 21 may play an anti-magnetic interference (EMC) effect on the second electrical components 22 located in the second housing 21, thus ensuring the stability of signal transmission.

The housing bottom of the second housing 21 extends to the bottom of the first housing 11 and is configured as the bottom plate 3. For example, the housing bottom of the second housing 21 may be integrally formed on the bottom of the second housing 21, and the housing bottom of the second housing 21 may be flat, and may extend to the left of the second housing 21 and to the bottom of the first housing 11, and the first housing 11 may be fixed to the housing bottom portion where the second housing 21 extends. At this time, the housing bottom of the second housing 21 forms the above-mentioned bottom plate 3. Therefore, the integration of the bottom plate 3 and the management control unit 2 is further improved, and the situation of overlapping between the housing bottom of the second housing 21 and the bottom plate 3 when the bottom plate 3 is additionally added is also avoided, thereby further reducing the material cost and improving the compactness of assembly.

In some embodiments, the management control unit 2 includes a plurality of pillars 23, the second electrical component 22 includes a power board 221, the power board 221 is arranged in the second housing 21, and the second housing 21 includes a metal cover 211, and a plurality of pillars 23 support the metal cover 211 and the circuit board 5 and are located between the metal cover 211 and the circuit board 5.

For example, as illustrated in FIG. 3, the power board 221 may be the power board 221 of CCU, the metal cover 211 may be rectangular, and the metal cover 211 may be snapped on the top side of the second housing 21, so that it may play a role in shielding and blocking the top side of the second housing 21 and electromagnetic protection. The power board 221 may be located directly above the metal cover 211 and may be spaced from the metal cover 211, and there may provide with four pillars 23, and the four pillars 23 may support the four corners of the power board 221 and the four corners of the metal cover 211.

Since the height of the power distribution unit 1 is usually higher than that of the management control unit 2, the metal cover 211 and the first circuit board 53 may be connected and fixed by the support of the pillars 23, which may compensate the height difference between the power distribution unit 1 and the second housing 21, and may also enhance the structural strength.

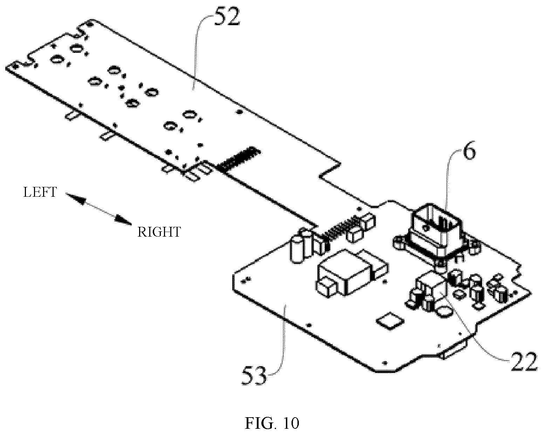

In some embodiments, as illustrated in FIGS. 9 and 10, the second circuit board 52 may be generally rectangular and the first circuit board 53 may be generally square. The second circuit board 52 may be arranged opposite to the power distribution unit 1 in the up-down direction and directly connected to the power distribution unit 1, and the first circuit board 53 may be arranged opposite to other parts of the management control unit 2 in the up-down direction and directly connected to the management control unit 2.

The direct connection mode may be welding, so that on the one hand, the fixing between the second circuit board 52 and the power distribution unit 1, and between the first circuit board 53 and other parts of the management control unit 2 is realized, and on the other hand, the needs for conduction are met.

In some embodiments, the distances between the first circuit board 53 and the bottom board 3 and between the second circuit board 52 and the bottom board 3 are the same. Specifically, in the up-down direction, both the first circuit board 53 and the second circuit board 52 may be provided on the top side of the bottom plate 3 and generally parallel to the bottom plate 3, and the spacing distance between the first circuit board 53 and the bottom plate 3 is approximately the same as that between the second circuit board 52 and the bottom plate 3, which is beneficial to the integration of the first circuit board 53 and the second circuit board 52.

In some embodiments, the battery management device includes an electrical interface 6, and the electrical interface 6 is used for electrically connecting with the outside of the battery, and the electrical interface 6 is integrated in the first circuit board 53. For example, as illustrated in FIGS. 9 and 10, the electrical interface 6 may be an external low-voltage interface, and the electrical interface 6 may be directly fixed on the first circuit board 53 by welding, thus avoiding the situation in the related art that the electrical interface 6 needs to be connected with the circuit board 5 by means of an external patch cord, further improving the overall integration and reducing the cost.

In some embodiments, at least part of the electrical interface 6 may be variably displaced with respect to the first circuit board 53. For example, a part of the electrical interface 6 may be elastically deformed, specifically a part of the electrical interface 6 may be a bellows-like structure. During use, part of the electrical interface 6 may float up and down relative to the first circuit board 53, thus avoiding the hard connection between the electrical interface 6 and the first circuit board 53, and playing a certain role in compensating the assembly tolerance and realizing self-protection.

In some embodiments, the bottom plate is a metal plate. For example, the bottom plate 3 may be an aluminum alloy plate, and the bottom plate 3 may be generally rectangular. Both the power distribution unit 1 and the management control unit 2 may be installed on the top side of the bottom plate 3. The heat conducting area 133 of the electrical connector 13 of the power distribution unit 1 may be arranged facing towards the bottom plate 3, and the above-mentioned insulating layer 14 and heat conducting layer 15 may be sandwiched between the heat conducting area 133 and the bottom plate 3. When in use, the heat on the electrical connector 13 may be conducted to the insulating layer 14, the heat conducting layer 15 in turn through the heat conducting area 133, and finally to the bottom plate 3, and then the heat may be quickly dissipated by means of the bottom plate 3.

In other embodiments, the inside of the bottom plate 3 is provided with a channel for coolant to flow. The channel is used for circulating coolant, and the coolant is used for cooling the heat conducting area 133, and the channel is communicated with a coolant interface 7 for introducing the coolant into the channel. For example, the bottom plate 3 may be a liquid-cooled plate, and the channel may bend and extend in the bottom plate 3. As illustrated in FIG. 9, the inlet and outlet of the channel may be connected with a coolant interface 7. When in use, the circulating flow of the coolant in the channel may be realized via the corresponding coolant interface 7, so that the power distribution unit 1 and the management control unit 2 may be actively cooled.

A battery according to embodiments of the present invention will be described below.

The battery according to embodiments of the present invention includes a battery management device, which may be the battery management device described in any of the above embodiments.

A vehicle according to embodiments of the present invention will be described below.

A vehicle according to embodiments of the present invention includes a battery, which may be the battery as described in any of the above embodiments. The vehicle may be a new energy vehicle, such as a saloon car, a SUV, a bus, a truck, and other vehicles that need to be equipped with a battery.

In the description of the present invention, it should be understood that, the azimuth or positional relationship indicated by terms center, longitudinal, transverse, length, width, thickness, up, down, front, rear, left, right, vertical, horizontal, top, bottom, inside, outside, clockwise, counterclockwise, axial, radial and circumferential is based on the azimuth or positional relationship illustrated in the attached drawings, which is only for the convenience of describing the present invention and simplifying the description, and does not indicate or imply that the device or element must have a specific orientation, be constructed and operated in a specific orientation, so it may not be understood as a limitation of the present invention.

In addition, the terms "first" and "second" are only used for descriptive purposes, and may not be understood as indicating or implying relative importance or implicitly indicating the number of indicated technical features. Therefore, the features defined as "first" and "second" may explicitly or implicitly include at least one of these features. In the description of the present invention, "plural" means at least two, such as two, three, etc., unless otherwise specifically defined.

In the present invention, unless otherwise specified and limited, the terms "install", "connect", "couple" and "fix" should be broadly understood, for example, which may be fixedly connected, detachably connected or integrated; which may be mechanically connected, electrically connected or communicated with each other; which may be directly connected or indirectly connected through an intermediary, and may be the internal connection of two elements or the interaction between two elements, unless otherwise specified. For those skilled in the art, the specific meanings of the above terms in this invention may be understood according to specific situations.

In the present invention, unless otherwise specified and limited, the first feature "above" or "below" the second feature may be that the first and second features are in direct contact, or the first and second features are in indirect contact through an intermediary. Moreover, the first feature is "upon ", "above" and "on" the second feature, which may mean that the first feature is directly above or obliquely above the second feature, or just means that the horizontal height of the first feature is higher than the second feature. The first feature "down", "below" and "under" the second feature may mean that the first feature is directly or obliquely below the second feature, or just means that the horizontal height of the first feature is smaller than the second feature.

In the present invention, the terms "an embodiment", "some embodiments", "an example", "a specific example" or "some examples" etc. mean that a specific feature, structure, material or characteristic described in connection with this embodiment or example is included in at least one embodiment or example of the present invention. In this specification, the schematic expressions of the above terms are not necessarily aimed at the same embodiment or example. Moreover, the specific features, structures, materials or characteristics described may be combined in any one or more embodiments or examples in a suitable manner. In addition, those skilled in the art may combine different embodiments or examples and features of different embodiments or examples described in this specification without contradicting each other.

## Claims

1. A battery management device, comprising:
a power distribution unit (1);
a management control unit (2), comprising a first circuit board (53);
a bottom plate (3), wherein the power distribution unit (1) and the management control unit are integrated on the bottom plate (3);
a second circuit board electrically connected with the first circuit board (53) and the power distribution unit (1), and the first circuit board (53) and the second circuit board (52) are integrally formed.

2. The battery management device according to claim 1, comprising a cover body (4), wherein the cover body (4) is provided on a side of the second circuit board (52) facing away from the power distribution unit (1), and the cover body (4) is fixedly connected to the power distribution unit (1) and the management control unit (2).

3. The battery management device according to claim 1 or 2, wherein the power distribution unit (1) comprises a first housing (11) and a plurality of first electrical components (12), wherein the first housing (11) is connected to the bottom plate (3), and the plurality of first electrical components (12) are assembled in the first housing (11); an outer surface of the first housing (11) corresponding to the first electrical components (12) is made of insulating material, and at least part of the first electrical components (12) are electrically connected with the second circuit board (52).

4. The battery management device according to claim 3, wherein the power distribution unit (1) comprises an electrical connector (13), wherein the electrical connector (13) is electrically connected with the first electrical component (12), and a bottom wall (113) of the first housing (11) is located at one side of the first housing (11) close to the bottom plate (3), and at least part of the electrical connector (13) is provided on the bottom wall (113) of the first housing (11) and exposed relative to the bottom wall (113) of the housing to form a heat conducting area (133).

5. The battery management device according to claim 4, wherein at least part of the electrical connector (13) and the first housing (11) are integrally injection molded.

6. The battery management device according to claim 4 or 5, wherein the power distribution unit (1) further comprises an insulating layer (14), wherein the insulating layer (14) covers the heat conducting area (133).

7. The battery management device according to claim 6, wherein the power distribution unit (1) further comprises a heat conducting layer (15), wherein the heat conducting layer (15) is sandwiched between the insulating layer (14) and the bottom plate (3).

8. The battery management device according to any one of claims 4-7, wherein the electrical connector (13) comprises a plate body (131) and a column body (132), and the plate body (131) and the bottom wall (113) of the housing are injection molded, and the column body (132) is located in the first housing (11) and extends along a direction from the bottom wall (113) of the housing to the second circuit board (52), the column body (132) is connected between the second circuit board (52) and the plate body (131), and at least part of the surface of the plate body (131) is exposed from the bottom wall (113) of the housing to form the heat conducting area (133).

9. The battery management device according to claim 8, wherein the circuit board (5) comprises a plurality of connecting pieces (51) arranged at intervals along a circumferential direction of the circuit board (5), and the electrical connector (13) is provided with a plurality of column bodies (132), and at least part of the column bodies (132) are correspondingly connected with the plurality of connecting pieces (51), and joints between part of column bodies (132) and the connecting pieces (51) are configured to form circuit sampling points, and joints between part of column bodies (132) and the connecting pieces (51) are configured to output current externally;
preferably, the power distribution unit (1) comprises a plurality of adapter pieces (8), wherein the adapter pieces (8) extend in a bending direction, and the plurality of connecting pieces (51) are correspondingly connected with the plurality of column body (132) bodies through the plurality of adapter pieces (8).

10. The battery management device according to any one of claims 3-9, wherein the management control unit (2) comprises a second housing (21) and a second electrical component (22), wherein the second housing (21) is made of metal, at least part of the second electrical component (22) is assembled in the second housing (21), and a bottom wall of the second housing (21) extends to the bottom of the first housing (11) and is configured as the bottom plate (3);
preferably, the management control unit (2) comprises a plurality of pillars (23), and the second electrical component (22) comprises a power board (221), and the power board (221) is provided in the second housing (21), and the second housing (21) comprises a metal cover (211), and the plurality of pillars (23) support the metal cover (211) and the circuit board (5) and are located between the metal cover (211) and the circuit board (5).

11. The battery management device according to any one of claims 1-10, wherein distances between the first circuit board (53) and the bottom plate (3) and between the second circuit board (52) and the bottom plate (3) are the same.

12. The battery management device according to any one of claims 1-11, comprising an electrical interface (6), wherein the electrical interface (6) is configured to electrically connect with an outside of the battery, and is integrated in the first circuit board (53).

13. The battery management device according to any one of claims 1-12, wherein the bottom plate (3) is a metal plate, and/or, a channel for circulating coolant is provided inside the bottom plate (3).

14. A battery comprising the battery management device according to any one of claims 1-13.

15. A vehicle comprising the battery as claimed in claim 14.
